# EUROPEAN PATENT SPECIFICATION

(11) **EP 1 715 604 B1**
(45) Date of publication and mention of the grant of the patent: **22.10.2008**
(21) Application number: 06251046.6
(22) Date of filing: 28.02.2006
(51) Int. Cl.: H04H 1/00, H04L 27/26

(54) **Apparatus and method for detecting transmission mode for digital broadcasting receiver**
Vorrichtung und Verfahren zur Erkennung des Übertragungsmodus für digitalen Rundfunkempfänger
Appareil et méthode de détection du mode de transmission pour récepteur de radiodiffusion numérique

(30) Priority: 29.03.2005 KR 2005026036
(43) Date of publication of application: 25.10.2006
(73) Proprietor: SAMSUNG ELECTRONICS CO., LTD., Suwon-city, Gyunggi-do (KR)
(72) Inventor: Park, Chan-sub, Incheon (KR)
(74) Representative: Clark, David James

(56) References cited:
- EP-A- 0 978 974
- EP-A- 1 267 536
- US-A1- 2003 021 363
- US-A1- 2004 223 449

## Description

The present invention relates to apparatus for detecting a transmission mode for a digital broadcasting receiver and to methods thereof

With the recent popularization of digital audio apparatuses having high sound quality such as CD and DVD, demands of users for high sound quality digital broadcasting have increased. Accordingly, Digital Audio Broadcasting (DAB) has been introduced to overcome a limit of sound quality provided by general FM broadcasting.

In addition to high sound quality, the DAB system shows excellent reception capability while on the move, and can transmit digital data such as images or characters at a high speed. Recently, DAB has become known as Digital Multimedia Broadcasting (DMB), with emphasis on various multimedia services including images, rather than audio broadcasting alone.

The DMB system is classified into European, American and Japanese types. EUREKA-147 is the European DMB system, which uses Orthogonal Frequency Division Multiplexing (OFDM) as digital modulation to overcome multiple path fading distortion on the ground wave. The national standardization for the DMB services provides CD-level sound quality, various data services and excellent mobile reception quality on the basis of the European DMB.

The DMB system defines four kinds of transmission mode (modes I, II, III and IV) in order to provide the DMB services in different transmission networks and broad operating frequencies. The length of the signals transmitted in the DMB system and the number of the carrier waves are varied in each transmission mode.

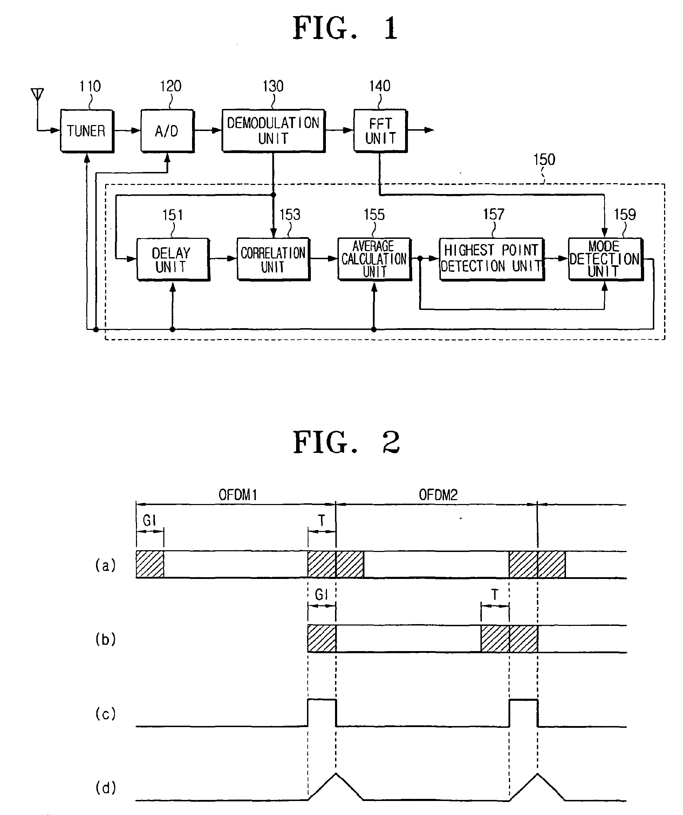

Fig. 1 is a block diagram illustrating a conventional apparatus for detecting a transmission mode for a DAB/DMB receiver.

Referring to Fig. 1, the DAB/DMB receiver includes a tuner 110 for converting an RF signal received through a channel into a base signal, an A/D converter 120 for converting the received analog signal into a digital signal, a demodulation unit 130 for detecting synchronization and demodulating the base signal converted into the digital signal, a Fast Fourier Transform (FFT) unit 140 for performing the FFT on the demodulated signal in predetermined units, and an apparatus 150 for detecting a transmission mode which detects the transmission mode of the received signal.

The apparatus 150 for detecting the transmission mode includes a delay unit 151 for delaying the demodulated signal by the FFT length, namely, the number of the samples composing one OFDM symbol; a correlation unit 153 and an average calculation unit 155 which obtain correlation of the delayed signal and the demodulated signal, calculate the average by adding the signals, and calculate correlation values; a highest point detection unit 157 for detecting the highest points from the calculated correlation values; and a transmission mode detection unit 159 for measuring a period of the highest points by using the highest points, and detecting a corresponding transmission mode.

Fig. 2 helps explanation of the operation of the apparatus for detecting the transmission mode of Fig. 1.

In the DAB/DMB system, the number of the samples composing one OFDM symbol, namely, the FFT length is different in each transmission mode.

As shown in Fig. 2, one OFDM symbol includes the signal modulated by the IFFT, and a Guard Interval (GI) formed by copying the termination T of the signal by a predetermined length and inserting the termination T into the front end of the signal. The GI serves to prevent Inter-Symbol Interference (ISI) and overcome multiple path phenomenon in a poor channel environment.

Still referring to Fig. 2, when the OFDM signal is delayed by the FFT length, the correlation value of the GI identical to the termination T of the OFDM symbol is calculated. Here, the highest point of the correlation value is formed, and the period of the highest points corresponds to the length of the OFDM symbol.

As mentioned above, the length of the OFDM symbol is different in each transmission mode. As a result, the transmission mode can be detected by measuring the period of the highest points of the correlation values.

The conventional method for detecting the transmission mode detects the transmission mode by calculating the correlation values by using the GI, and measuring the period of the highest points. However, the GI is easily damaged in poor channel environment, thereby reducing transmission mode detection performance.

In addition, when the receiver experiences timing errors, the received signal may not be precisely delayed. Therefore, detection of the highest points and measurement of the period of the highest points may not be accurate, which can result in low transmission mode detection performance.

EP 0 978 974 describes a DAB receiver capable of detection of the DAB transmission ode. The receiver includes a delay circuit for delaying a received DAB signal is provided; a correlation circuit for correlating a delay output of the delay circuit with the received DAB signal is provided; and a moving average circuit for calculating a moving average of a correlation output of the correlation circuit is provided. A transmission mode is assumed to be one of a plurality of transmission modes. The delay time of the circuit is set at a time corresponding to a symbol time length of the assumed transmission mode. The number of events that the output of the moving average circuit exceeds a prescribed value is counted. Based on counting results, a transmission mode that gives the maximum number of events that the output of the moving average circuit exceeds the prescribed value is judged ot be the actual transmission mode.

An aim of preferred embodiments of the present invention is to address at least one problem associated with the prior art, whether identified herein, or otherwise.

According to a first aspect of the invention, there is provided an apparatus for detecting a transmission mode for a digital broadcasting receiver, comprising: a Time-domain Phase Reference Symbol (TPRS) generation unit for generating reference TPRS of each transmission mode in regard to TPRS making up a demodulated signal generated by demodulating a received signal; a correlation unit for calculating correlation values of the reference TPRS and the demodulated signal; a highest point detection unit for detecting the highest points of each calculated correlation value; and a mode detection unit for discriminating the reference TPRS corresponding to the demodulated signal by using the highest points, and detecting the corresponding transmission mode.

Suitably, the correlation unit receives the reference TPRS of each transmission mode from the TPRS generation unit, and calculates the correlation values of the reference TPRS and the demodulated signal, respectively.

Suitably, the highest point detection unit detects the highest points of each correlation value corresponding to the reference TPRS.

Suitably, the apparatus for detecting the transmission mode for the digital broadcasting receiver further includes a maximum value detection unit for detecting the maximum value of the highest points.

Suitably, the mode detection unit outputs the transmission mode for the reference TPRS corresponding to the correlation value having the maximum value among the highest points.

Suitably, the correlation unit calculates the correlation values of two consecutive transmission frames of the demodulated signal and any one of the reference TPRS.

Suitably, the highest point detection unit detects the highest points of the correlation values in the transmission frames, respectively.

Suitably, the mode detection unit calculates the length between the highest points, decides whether the length is identical to the length of the frame in the transmission mode corresponding to the reference TPRS, and outputs the transmission mode when the two lengths are identical.

Preferably, when the two lengths are not identical, the mode detection unit detects the transmission mode according to the correlation values of another reference TPRS and the demodulated signal.

According to a second aspect of the invention, there is provided a method for detecting a transmission mode for a digital broadcasting receiver, comprising the steps of: generating reference TPRS of each transmission mode in regard to TPRS making up a demodulated signal generated by demodulating a received signal; calculating correlation values of the reference TPRS and the demodulated signal; detecting the highest points of each calculated correlation value; and discriminating the reference TPRS corresponding to the demodulated signal by using the highest points, and outputting the corresponding transmission mode.

Suitably, the correlation value calculation step calculates the correlation values of the reference TPRS of the transmission modes and the demodulated signal, respectively.

Suitably, the highest point detection step detects the highest points of each correlation value corresponding to the reference TPRS.

Suitably, the method for detecting the transmission mode for the digital broadcasting receiver further comprises a step for detecting the maximum value of the highest points.

Suitably, the transmission mode detection step outputs the transmission mode for the reference TPRS corresponding to the correlation value having the maximum value among the highest points.

Suitably, the correlation value calculation step calculates the correlation values of two consecutive transmission frames of the demodulated signal and any one of the reference TPRS.

Suitably, the highest point detection step detects the highest points of the correlation values in the frames, respectively.

Suitably, the transmission mode output step calculates the length between the highest points, decides whether the length is identical to the length of the transmission frame in the transmission mode corresponding to the reference TPRS, and outputs the transmission mode when the two lengths are identical.

Suitably, when the two lengths are not identical, the transmission mode output step detects the transmission mode according to the correlation values of another reference TPRS and the demodulated signal.

For a better understanding of the invention, and to show how embodiments of the same may be carried into effect, reference will now be made, by way of example, to the accompanying diagrammatic drawings in which:
Fig. 1 is a block diagram illustrating a conventional apparatus for detecting a transmission mode for a DAB/DMB receiver.
Fig. 2 is a diagram helping explanation of the operation of the apparatus.
Fig. 3 is a diagram illustrating the structure of a transmission frame of a DAB/DMB system.
Fig. 4 is a block diagram illustrating an apparatus for detecting a transmission mode for a DAB/DMB receiver in accordance with a preferred embodiment of the present invention.
Fig. 5 is a flowchart showing sequential steps of the operation of the apparatus for detecting the transmission mode in accordance with an embodiment of the present invention.
Fig. 6 is a flowchart showing sequential steps of the operation of the apparatus for detecting the transmission mode in accordance with another embodiment of the present invention.
An apparatus for detecting a transmission mode for a digital broadcasting receiver and a method thereof in accordance with embodiments of the present invention will now be described in detail with reference to the accompanying drawings.

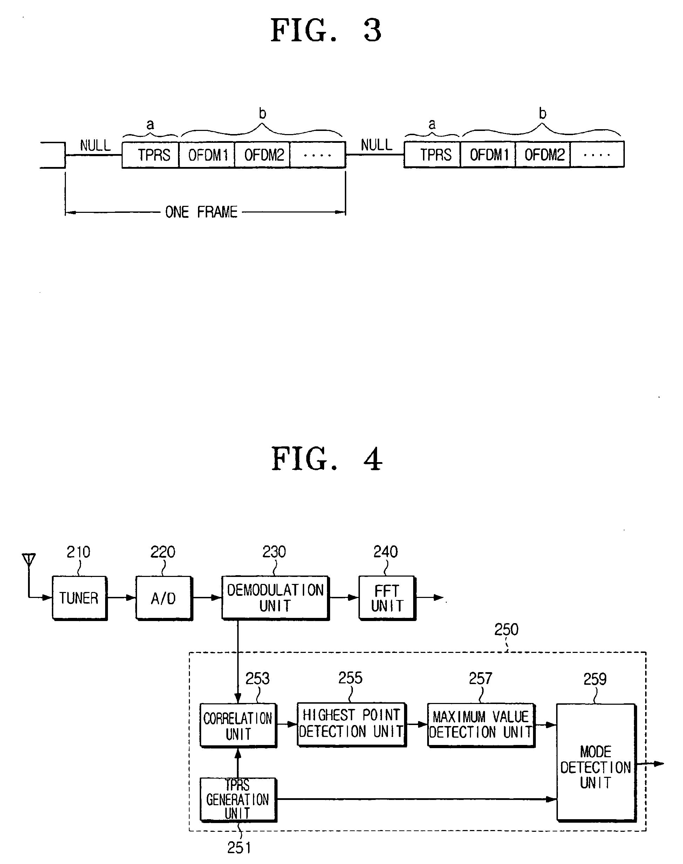

Fig. 3 is a structure diagram illustrating a transmission frame of an OFDM type DMB system. As shown in Fig. 3, the transmission frame includes a plurality of OFDM symbols after one null symbol.
A transmitter of the DMB system generates a Phase Reference Symbol (PRS), and performs the IFFT on the PRS. The thus-generated TPRS (a) is the first OFDM symbol after the null symbol. The plurality of effective data OFDM symbols (b) are positioned after the TPRS.

The null symbol and the TPRS (a) make up a synchronization channel of the frame. Each symbol includes a plurality of time-domain OFDM subcarrier signals.

The DAB/DMB system has different lengths of TPRS and transmission frame according to the four transmission modes, which is used to detect the transmission mode in embodiments of the present invention.

Fig. 4 is a block diagram illustrating the DAB/DMB receiver including the apparatus for detecting the transmission mode in accordance with a first embodiment of the present invention.

As illustrated in Fig. 4, the DAB/DMB receiver includes a tuner 210 for converting an RF signal received through a channel into a base signal, an A/D converter 220 for converting the received analog signal into a digital signal, a demodulation unit 230 for detecting synchronization and demodulating the base signal converted into the digital signal, an FFT unit 240 for performing the FFT on the demodulated signal in predetermined units, and an apparatus 250 for detecting a transmission mode which detects the transmission mode of the received signal.

The apparatus 250 for detecting the transmission mode includes a TPRS generation unit 251, a correlation unit 253, a highest point detection unit 255, a maximum value detection unit 257 and a mode detection unit 259.

The TPRS generation unit 251 generates reference TPRS corresponding to the four transmission modes, respectively. For this, the TPRS generation unit 251 preferably stores reference patterns of each TPRS in advance.

The correlation unit 253 calculates correlation values of the reference TPRS of each transmission mode from the TPRS generation unit 251 and the demodulated signal from the demodulation unit 230.

The highest point detection unit 255 detects the highest points from the correlation values corresponding to each transmission mode.

The maximum value detection unit 257 detects the highest point having the maximum value among the highest points detected in the highest point detection unit 255.

The mode detection unit 259 detects the transmission mode corresponding to the highest point having the maximum value detected in the maximum value detection unit 257 as the transmission mode for the received signal.

That is, when the TPRS of the received signal and the reference TPRS are identical, the highest point of the correlation value has the maximum value. Therefore, when the highest points are detected from each correlation value, the transmission mode corresponding to the reference TPRS generating the maximum value among the highest points becomes the transmission mode for the received signal.

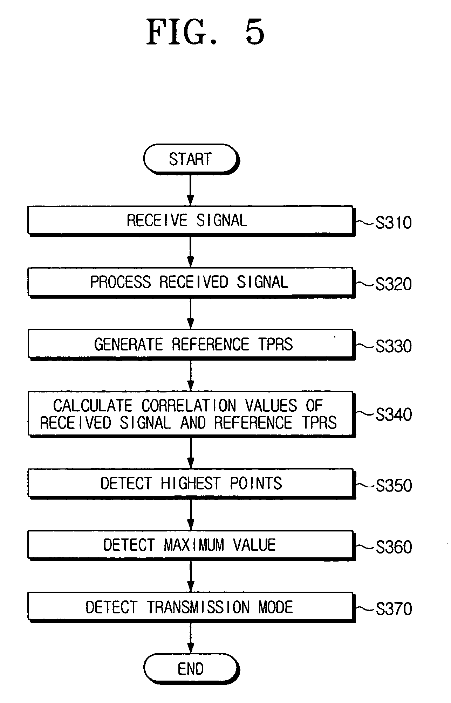

Fig. 5 is a flowchart showing sequential steps of the operation of the apparatus for detecting the transmission mode in accordance with a first embodiment of the present invention.

When the RF signal is received by the DAB/DMB receiver through the channel (S310), the received signal is converted into the base signal by the tuner 2 10, and then converted into the digital signal by the A/D converter 220. The digital signal is synchronization-detected and demodulated by the demodulation unit 230 (S320).

The apparatus 250 for detecting the transmission mode in accordance with the first embodiment of the present invention receives the demodulated signal from the demodulation unit 230.

The apparatus 250 for detecting the transmission mode generates the reference TPRS corresponding to the four transmission modes by the TPRS generation unit 251, respectively (S330).

In addition, the apparatus 250 for detecting the transmission mode calculates the correlation values of the reference TPRS of each transmission mode from the TPRS generation unit 251 and the demodulated signal from the demodulation unit 230 by the correlation unit 253 (S340).

The apparatus 250 for detecting the transmission mode detects the highest points from the correlation values corresponding to each transmission mode by the highest point detection unit 255, respectively (S350), and detects the maximum value among the highest points detected in the highest point detection unit 255 by the maximum value detection unit 257 (S360).

Thereafter, the apparatus 250 for detecting the transmission mode detects the transmission mode corresponding to the highest point having the maximum value detected in the maximum value detection unit 257 as the transmission mode for the received signal by the transmission mode detection unit 259 (S370).

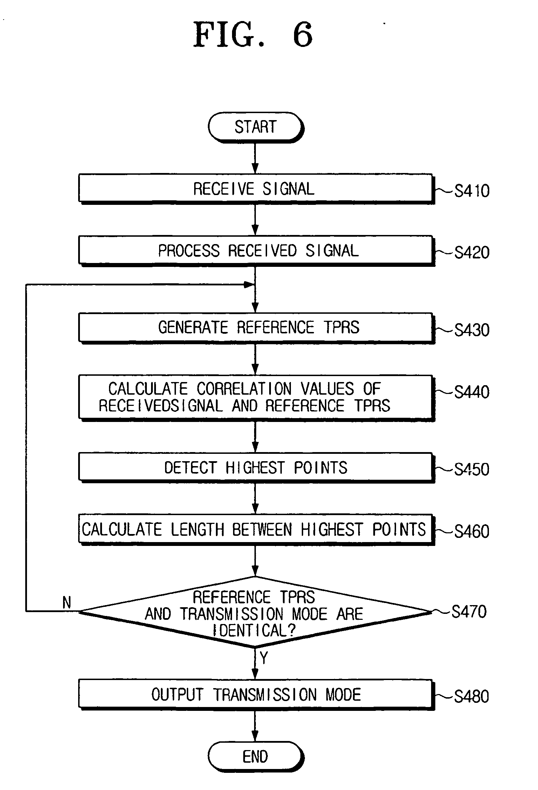

Fig. 6 is a flowchart showing sequential steps of the operation of the apparatus for detecting the transmission mode in accordance with another embodiment of the present invention.

In this embodiment, the apparatus 250 for detecting the transmission mode neither requires nor includes the maximum value detection unit 257 of Fig. 4. The other elements of the apparatus 250 for detecting the transmission mode are identical to those of the apparatus 250 for detecting the transmission mode of Fig. 4, and thus detailed explanations thereof are omitted.

For convenience's sake, the reference numerals of Fig. 4 are used for the apparatus 250 for detecting the transmission mode in accordance with this embodiment of the present invention.

When the RF signal is received by the DAB/DMB receiver through the channel (S410), the received signal is converted into the base signal by the tuner 210, and then converted into the digital signal by the A/D converter 220. The digital signal is synchronization-detected and demodulated by the demodulation unit 230 (S420).

The apparatus 250 for detecting the transmission mode receives the demodulated signal from the demodulation unit 230, and generates the reference TPRS corresponding to any one of the four transmission modes, for example, the transmission mode I by the TPRS generation unit 251 (S430).

In addition, the apparatus 250 for detecting the transmission mode calculates the correlation values of the reference TPRS of the transmission mode I from the TPRS generation unit 251 and two transmission frames of the demodulated signal from the demodulation unit 230 by the correlation unit 253 (S440).

The apparatus 250 for detecting the transmission mode detects the highest points from the correlation values corresponding to the two transmission frames by the highest point detection unit 255 (S450), and calculates the length between the detected highest points (S460).

The transmission mode detection unit 259 detects the transmission mode having the transmission frame length corresponding to the calculated length between the highest points, and decides whether the detected transmission mode is identical to the transmission mode corresponding to the reference TPRS from the TPRS generation unit 251 (S470).

Whether the transmission modes are identical can be decided by whether the calculated length between the highest points is identical to the transmission frame length in the transmission mode corresponding to the reference TPRS.

That is, the length between the highest points corresponds to the length of the transmission frame, which is different in each transmission mode. Accordingly, when the detected transmission mode is identical to the transmission mode by the reference TPRS, the transmission mode is deemed as the transmission mode for the received signal.

When the transmission mode detected by the length between the highest points is not identical to the transmission mode corresponding to the reference TPRS, the routine goes back to S430, to generate the reference TPRS of another transmission mode, for example, the transmission mode II and decide whether the transmission mode corresponding to the reference TPRS is identical to the transmission mode detected by the length between the highest points.

Therefore, when the transmission mode corresponding to the reference TPRS among the four transmission modes is identical to the transmission mode decided by the length between the highest points, the apparatus 250 for detecting the transmission mode outputs the transmission mode by the mode detection unit 259 (S480).

This embodiment of the present invention sequentially confirms whether each of the transmission modes is the transmission mode for the received signal by using the fact that the length of the transmission frame is different in each transmission mode in the DAB/DMB system.

As discussed earlier, the apparatus of the present invention detects the transmission mode by using the TPRS composing the OFDM signal frame. As compared with the conventional apparatus for detecting the transmission mode by using the GI, the apparatus of the present invention has a long correlation value calculation interval, and thus increases the correlation values corresponding to the highest points, thereby allowing precise detection of the transmission mode.

In addition, as compared with the conventional apparatus using the GI, the apparatus of the present invention has excellent performance even in the poor channel environment such as when the receiver experiences timing errors.

Although a few preferred embodiments have been shown and described, it will be appreciated by those skilled in the art that various changes and modifications might be made without departing from the scope of the invention, as defined in the appended claims.

## Claims

1. An apparatus for detecting a transmission mode for a digital broadcasting receiver, comprising:
a Time-domain Phase Reference Symbol (TPRS) generation unit (251) for generating reference TPRS of each transmission mode in regard to TPRS making up a demodulated signal generated by demodulating a signal received through the digital broadcasting receiver;
a correlation unit (253) for calculating correlation values of the reference TPRS and the demodulated signal;
a highest point detection unit (255) for detecting the highest points of each calculated correlation value; and
a mode detection unit (259) for discriminating the reference TPRS corresponding to the demodulated signal by using the highest points, and detecting the corresponding transmission mode, wherein the correlation unit (253) receives the reference TPRS of each transmission mode from the TPRS generation unit (251), and calculates the correlation values of the reference TPRS and the demodulated signal, respectively.

2. The apparatus for detecting the transmission mode for the digital broadcasting receiver according to claim 1, wherein the highest point detection unit (255)detects the highest points of each correlation value corresponding to the reference TPRS.

3. The apparatus for detecting the transmission mode for the digital broadcasting receiver according to claim 1 or 2, further comprising a maximum value detection unit (257) for detecting the maximum value of the highest points.

4. The apparatus for detecting the transmission mode for the digital broadcasting receiver according to claim 1 or 2, wherein, the mode detection unit outputs the transmission mode for the reference TPRS corresponding to the correlation value having the maximum value among the highest points.

5. The apparatus for detecting the transmission mode for the digital broadcasting receiver according to any preceding claim, wherein the correlation unit (253) calculates the correlation values of two consecutive transmission frames of the demodulated signal and any one of the reference TPRS.

6. The apparatus for detecting the transmission mode for the digital broadcasting receiver according to claim 5, wherein the highest point detection unit (255) detects the highest points of the correlation values in the transmission frames, respectively.

7. The apparatus for detecting the transmission mode for the digital broadcasting receiver according to claim 5 or 6, wherein the mode detection unit (259) calculates the length between the highest points, decides whether the length is identical to the length of the frame in the transmission mode corresponding to the reference TPRS, and outputs the transmission mode when the two lengths are identical.

8. The apparatus for detecting the transmission mode for the digital broadcasting receiver according to claim 7, wherein, when the two lengths are not identical, the mode detection unit (259) detects the transmission mode according to the correlation values of another reference TPRS and the demodulated signal.

9. A method for detecting a transmission mode for a digital broadcasting receiver, comprising the steps of:
generating reference TPRS of each transmission mode in regard to TPRS making up a demodulated signal generated by demodulating a signal received through the digital broadcasting receiver (S310-5330, S410-S430);
calculating correlation values of the reference TPRS and the demodulated signal; detecting the highest points of each calculated correlation value (S350, S450); and
discriminating the reference TPRS corresponding to the demodulated signal by using the highest points, and outputting the corresponding transmission mode (S360-S370, S460-S480), wherein the correlation value calculation step (S340, S440) calculates the correlation values of the reference TPRS of the transmission modes and the demodulated signal, respectively.

10. The method for detecting the transmission mode for the digital broadcasting receiver according to claim 9, wherein the highest point detection step (S350, S450) detects the highest points of each correlation value corresponding to the reference TPRS.

11. The method for detecting the transmission mode for the digital broadcasting receiver according to claim 9 or 10, further comprising a step for detecting the maximum value of the highest points (S360).

12. The method for detecting the transmission mode for the digital broadcasting receiver according to claim 9, 10 or 11, wherein the transmission mode detection step (S460-S480) outputs the transmission mode for the reference TPRS corresponding to the correlation value having the maximum value among the highest points (S460-S480).

13. The method for detecting the transmission mode for the digital broadcasting receiver according to any one of claims 9-12, wherein the correlation value calculation step (S340, S440) calculates the correlation values of two consecutive transmission frames of the demodulated signal and any one of the reference TPRS.

14. The method for detecting the transmission mode for the digital broadcasting receiver according to claim 13, wherein the highest point detection step (S340, S480) detects the highest points of the correlation values in the frames, respectively.

15. The method for detecting the transmission mode for the digital broadcasting receiver according to claim 13 or 14, wherein the transmission mode output step calculates the length between the highest points, decides whether the length is identical to the length of the transmission frame in the transmission mode corresponding to the reference TPRS (S470), and outputs the transmission mode when the two lengths are identical (S480).

16. The method for detecting the transmission mode for the digital broadcasting receiver according to claim 15, wherein, when the two lengths are not identical, the transmission mode output step detects the transmission mode according to the correlation values of another reference TPRS and the demodulated signal.

## Patentansprüche

1. Vorrichtung zum Detektieren eines Übertragungsmodus für einen Digitalrundfunkempfänger, umfassend:
eine Zeitbereichs-Phasenreferenzsymbol- bzw. TPRS-Erzeugungseinheit (251) zum Erzeugen des Referenz-TPRS jedes Übertragungsmodus in bezug auf TPRS, woraus ein demoduliertes Signal besteht, das durch Demodulieren eines durch den Digitalrundfunkempfänger empfangenen Signals erzeugt wird;
eine Korrelationseinheit (253) zum Berechnen von Korrelationswerten des Referenz-TPRS und des demodulierten Signals;
eine Detektionseinheit (255) höchster Punkte zum Detektieren der höchsten Punkte jedes berechneten Korrelationswerts; und
eine Modusdetektionseinheit (259) zum Unterscheiden des dem demodulierten Signal entsprechenden Referenz-TPRS durch Verwendung der höchsten Punkte und zum Detektieren des entsprechenden Übertragungsmodus, wobei die Korrelationseinheit (253) das Referenz-TPRS jedes Übertragungsmodus aus der TPRS-Erzeugungseinheit (251) empfängt und die Korrelationswerte des Referenz-TPRS bzw. des demodulierten Signals berechnet.

2. Vorrichtung zum Detektieren des Übertragungsmodus für den Digitalrundfunkempfänger nach Anspruch 1, wobei die Detektionseinheit (255) höchster Punkte die höchsten Punkte jedes dem Referenz-TPRS entsprechenden Korrelationswert detektiert.

3. Vorrichtung zum Detektieren des Übertragungsmodus für den Digitalrundfunkempfänger nach Anspruch 1 oder 2, ferner mit einer Maximalwertdetektionseinheit (257) zum Detektieren des Maximalwerts der höchsten Punkte.

4. Vorrichtung zum Detektieren des Übertragungsmodus für den Digitalrundfunkempfänger nach Anspruch 1 oder 2, wobei die Modusdetektionseinheit den Übertragungsmodus für das Referenz-TPRS ausgibt, das dem Korrelationswert mit dem maximalen Wert unter den höchsten Punkten entspricht.

5. Vorrichtung zum Detektieren des Übertragungsmodus für den Digitalrundfunkempfänger nach einem der vorhergehenden Ansprüche, wobei die Korrelationseinheit (253) die Korrelationswerte zweier aufeinanderfolgender Übertragungsrahmen des demodulierten Signals und eines beliebigen der Referenz-TPRS berechnet.

6. Vorrichtung zum Detektieren des Übertragungsmodus für den Digitalrundfunkempfänger nach Anspruch 5, wobei die Detektionseinheit (255) höchster Punkte jeweils die höchsten Punkte der Korrelationswerte in den Übertragungsrahmen detektiert.

7. Vorrichtung zum Detektieren des Übertragungsmodus für den Digitalrundfunkempfänger nach Anspruch 5 oder 6, wobei die Modusdetektionseinheit (259) die Länge zwischen den höchsten Punkten berechnet, entscheidet, ob die Länge mit der Länge des Rahmens in dem Übertragungsmodus, der dem Referenz-TPRS entspricht, identisch ist, und den Übertragungsmodus ausgibt, wenn die beiden Längen identisch sind.

8. Vorrichtung zum Detektieren des Übertragungsmodus für den Digitalrundfunkempfänger nach Anspruch 7, wobei, wenn die beiden Längen nicht identisch sind, die Modusdetektionseinheit (259) den Übertragungsmodus gemäß den Korrelationswerten eines anderen Referenz-TPRS und dem demodulierten Signal detektiert.

9. Verfahren zum Detektieren eines Übertragungsmodus für einen Digitalrundfunkempfänger, mit den folgenden Schritten:
Erzeugen von Referenz-TPRS für jeden Übertragungsmodus in bezug auf TPRS, woraus ein demoduliertes Signal besteht, das durch Demodulieren eines durch den Digitalrundfunkempfänger empfangenen Signals erzeugt wird (S310-S330, S410-S430);
Berechnen von Korrelationswerten der Referenz-TPRS und des demodulierten Signals;
Detektieren der höchsten Punkte jedes berechneten Korrelationswerts (S350, S450); und
Unterscheiden der Referenz-TPRS, die dem demodulierten Signal entsprechen, durch Verwendung der höchsten Punkte und Ausgeben des entsprechenden Übertragungsmodus (S360-S370, S460-S480), wobei der Korrelationswertberechnungsschritt (S340, S440) die Korrelationswerte der Referenz-TPRS der Übertragungsmoden bzw. des demodulierten Signals berechnet.

10. Verfahren zum Detektieren des Übertragungsmodus für den Digitalrundfunkempfänger nach Anspruch 9, wobei der Schritt der Detektion höchster Punkte (S350, S450) die höchsten Punkte jedes Korrelationswerts, der dem Referenz-TPRS entspricht, detektiert.

11. Verfahren zum Detektieren des Übertragungsmodus für den Digitalrundfunkempfänger nach Anspruch 9 oder 10, ferner mit einem Schritt zum Detektieren des Maximalwerts der höchsten Punkte (S360).

12. Verfahren zum Detektieren des Übertragungsmodus für den Digitalrundfunkempfänger nach Anspruch 9, 10 oder 11, wobei der Übertragungsmodus-Detektionsschritt (S460-S480) den Übertragungsmodus für das Referenz-TPRS ausgibt, das dem Korrelationswert mit dem maximalen Wert unter den höchsten Punkten entspricht (S460-S480).

13. Verfahren zum Detektieren des Übertragungsmodus für den Digitalrundfunkempfänger nach einem der Ansprüche 9-12, wobei der Korrelationswertberechnungsschritt (S340-S440) die Korrelationswerte zweier aufeinanderfolgender Übertragungsrahmen des demodulierten Signals und eines beliebigen der Referenz-TPRS berechnet.

14. Verfahren zum Detektieren des Übertragungsmodus für den Digitalrundfunkempfänger nach Anspruch 13, wobei der Schritt der Detektion höchster Punkte (S340, S480) jeweils die höchsten Punkte der Korrelationswerte in den Rahmen detektiert.

15. Verfahren zum Detektieren des Übertragungsmodus für den Digitalrundfunkempfänger nach Anspruch 13 oder 14, wobei der Übertragungsmodus-Ausgabeschritt die Länge zwischen den höchsten Punkten berechnet, entscheidet, ob die Länge mit der Länge des Übertragungsrahmens in dem Übertragungsmodus, der dem Referenz-TPRS entspricht, identisch ist (S470) und den Übertragungsmodus ausgibt, wenn die beiden Längen identisch sind (S480).

16. Verfahren zum Detektieren des Übertragungsmodus für den Digitalrundfunkempfänger nach Anspruch 15, wobei, wenn die beiden Längen nicht identisch sind, der Übertragungsmodus-Ausgabeschritt den Übertragungsmodus gemäß den Korrelationswerten eines anderen Referenz-TPRS und dem demodulierten Signal detektiert.

## Revendications

1. Appareil destiné à détecter un mode de transmission pour un récepteur numérique de télédiffusion, comprenant :
une unité de génération (251) de symbole de référence de phase dans le domaine du temps (TPRS) permettant de générer un symbole TPRS de référence de chaque mode de transmission en ce qui concerne le symbole TPRS constituant un signal démodulé généré en démodulant un signal reçu par l'intermédiaire du récepteur numérique de télédiffusion,
une unité de corrélation (253) permettant de calculer des valeurs de corrélation du symbole de référence TPRS et du signal démodulé,
une unité de détection de points les plus hauts (255) permettant de détecter les points les plus hauts de chaque valeur de corrélation calculée, et
une unité de détection de mode (259) permettant d'effectuer une discrimination du symbole TPRS de référence correspondant au signal démodulé en utilisant les points les plus hauts et de détecter le mode de transmission correspondant, dans lequel l'unité de corrélation (253) reçoit le symbole TPRS de référence de chaque mode de transmission en provenance de l'unité de génération de symbole TPRS (251) et calcule respectivement les valeurs de corrélation du symbole TPRS de référence et du signal démodulé.

2. Appareil destiné à détecter le mode de transmission pour le récepteur numérique de télédiffusion selon la revendication 1, dans lequel l'unité de détection de points les plus hauts (255) détecte les points les plus hauts de chaque valeur de corrélation correspondant au symbole TPRS de référence.

3. Appareil destiné à détecter le mode de transmission pour le récepteur numérique de télédiffusion selon la revendication 1 ou 2, comprenant en outre une unité de détection de valeur maximale (257) permettant de détecter la valeur maximale des points les plus hauts.

4. Appareil destiné à détecter le mode de transmission pour le récepteur numérique de télédiffusion selon la revendication 1 ou 2, dans lequel l'unité de détection de mode fournit en sortie le mode de transmission pour le symbole TPRS de référence correspondant à la valeur de corrélation présentant la valeur maximale parmi les points les plus hauts.

5. Appareil destiné à détecter le mode de transmission pour le récepteur numérique de télédiffusion selon l'une quelconque des revendications précédentes, dans lequel l'unité de corrélation (253) calcule les valeurs de corrélation de deux trames consécutives de transmission du signal démodulé et de l'un quelconque des symboles TPRS de référence.

6. Appareil destiné à détecter le mode de transmission pour le récepteur numérique de télédiffusion selon la revendication 5, dans lequel l'unité de détection de points les plus hauts (255) détecte respectivement les points les plus hauts des valeurs de corrélation dans les trames de transmission.

7. Appareil destiné à détecter le mode de transmission pour le récepteur numérique de télédiffusion selon la revendication 5 ou 6, dans lequel l'unité de détection de mode (259) calcule la longueur entre les points les plus hauts, détermine si la longueur est identique à la longueur de la trame dans le mode de transmission correspondant au symbole TPRS de référence et fournit en sortie le mode de transmission lorsque les deux longueurs sont identiques.

8. Appareil destiné à détecter le mode de transmission pour le récepteur numérique de télédiffusion selon la revendication 7, dans lequel, lorsque les deux longueurs ne sont pas identiques, l'unité de détection de mode (259) détecte le mode de transmission en fonction des valeurs de corrélation d'un autre symbole TPRS de référence et du signal démodulé.

9. Procédé destiné à détecter un mode de transmission pour un récepteur numérique de télédiffusion, comprenant les étapes consistant à :
générer le symbole TPRS de référence de chaque mode de transmission en ce qui concerne le symbole TPRS constituant un signal démodulé, généré en démodulant un signal reçu par l'intermédiaire du récepteur numérique de télédiffusion (S310 à S330, S410 à S430),
calculer les valeurs de corrélation du symbole TPRS de référence et du signal démodulé,
détecter les points les plus hauts de chaque valeur de corrélation calculée (S350, S450), et
effectuer une discrimination entre le symbole TPRS de référence correspondant au signal démodulé en utilisant les points les plus hauts et fournir en sortie le mode de transmission correspondant (S360 à S370, S460 à S480), dans lequel l'étape de calcul de la valeur de corrélation (S340, S440) calcule respectivement les valeurs de corrélation des symboles TPRS de référence des modes de transmission et du signal démodulé.

10. Procédé permettant de détecter le mode de transmission pour le récepteur numérique de télédiffusion selon la revendication 9 dans lequel l'étape de détection des points les plus hauts (S350, S450) détecte les points les plus hauts de chaque valeur de corrélation correspondant au symbole TPRS de référence.

11. Procédé permettant de détecter le mode de transmission pour le récepteur numérique de télédiffusion selon la revendication 9 ou 10, comprenant en outre une étape consistant à détecter la valeur maximale des points les plus hauts (S360).

12. Procédé permettant de détecter le mode de transmission pour le récepteur numérique de télédiffusion selon la revendication 9, 10 ou 11, dans lequel l'étape de détection du mode de transmission (S460 à S480) fournit en sortie le mode de transmission pour le symbole TPRS de référence correspondant à la valeur de corrélation présentant la valeur maximale parmi les points les plus hauts (S460 à S480).

13. Procédé permettant de détecter le mode de transmission pour le récepteur numérique de télédiffusion selon l'une quelconque des revendications 9 à 12, dans lequel l'étape de calcul de la valeur de corrélation (S340, S440) calcule les valeurs de corrélation de deux trames consécutives de transmission du signal démodulé et de l'un quelconque des symboles TPRS de référence.

14. Procédé permettant de détecter le mode de transmission pour le récepteur numérique de télédiffusion selon la revendication 13, dans lequel l'étape de détection des points les plus hauts (S340, S480) détecte respectivement les points les plus hauts des valeurs de corrélation dans les trames.

15. Procédé permettant de détecter le mode de transmission pour le récepteur numérique de télédiffusion selon la revendication 13 ou 14, dans lequel l'étape de sortie du mode de transmission calcule la longueur entre les points les plus hauts, détermine si la longueur est identique à la longueur de la trame de transmission dans le mode de transmission correspondant au symbole TPRS de référence (S470) et fournit en sortie les modes de transmission lorsque les deux longueurs sont identiques (S480).

16. Procédé permettant de détecter le mode de transmission pour le récepteur numérique de télédiffusion selon la revendication 15, dans lequel, lorsque les deux longueurs ne sont pas identiques, l'étape de sortie du mode de transmission détecte le mode de transmission en fonction des valeurs de corrélation d'un autre symbole TPRS de référence et du signal démodulé.
